# EUROPEAN PATENT APPLICATION

(11) **EP 3 897 019 A1**
(43) Date of publication of application: **20.10.2021**
(21) Application number: 20170181.0
(22) Date of filing: 17.04.2020
(51) Int. Cl.: H04W 12/00, G06F 21/10, H04L 29/06, G06F 9/06, G06F 8/61

(54) **A PROVISIONING CONTROL APPARATUS, SYSTEM AND METHOD**

(71) Applicant: Secure Thingz Limited, Trumpington, Cambridge CB2 9FF (GB)
(72) Inventor: SPITZ, Stephan, 85757 Karlsfeld (DE); WOODRUFF, Tim, Cambridge, CB2 1RR (GB); HOOLE, Tim, Foxton, Cambridgeshire CB22 6SU (GB); BOTT, Andrew, Cambridge, Cambridgeshire CB23 7PW (GB)
(74) Representative: Patentship Patentanwaltsgesellschaft mbH

(57) **Abstract**

The invention relates to a provisioning control apparatus (140) configured to be coupled to a provisioning equipment server (160), wherein the provisioning equipment server (160) is electrically connectable with one or more electronic devices (170) for provisioning the one or more electronic devices (170) with a program code (150) in accordance with a first provisioning service tier of a plurality of provisioning service tiers. The provisioning control apparatus (140) comprises a communication interface (143) configured to receive an electronic provisioning token (180) and a processor (141) configured to determine on the basis of the electronic provisioning token (180) a second provisioning service tier afforded by the electronic provisioning token (180). The communication interface (143) is further configured to transmit the program code (150) towards the provisioning equipment server (160), wherein the processor (141) is further configured to prohibit a transmission of the program code (150) towards the provisioning equipment server (160) if the second provisioning service tier afforded by the electronic provisioning token (180) is insufficient for provisioning of the one or more electronic devices (170) by the provisioning equipment server (160) in accordance with the first provisioning service tier. Moreover, the invention relates to a provisioning control system (100) comprising the provisioning control apparatus (140) as well as a corresponding method for provisioning the one or more electronic devices (170).

## Description

### TECHNICAL FIELD

The invention relates to the secure production and provisioning of electronic devices. More specifically, the invention relates to an apparatus, system and method for controlling the provisioning of electronic devices.

### BACKGROUND OF THE INVENTION

The production and assembly of state-of-the-art electronic consumer equipment, such as smartphones, tablet computers as well as other types of loT devices, often happens in a distributed fashion in that the various electronic components or devices, including the electronic chips or microprocessors of the electronic consumer equipment are manufactured, provisioned or personalized and finally assembled at different locations and by different parties. For instance, an electronic chip or microprocessor for an electronic consumer equipment may be originally manufactured by a chip manufacturer and provisioned by another party with a suitable firmware, before being assembled into the final end product by the manufacturer of the electronic consumer equipment, e.g. an OEM.

For such distributed processing chains of electronic equipment there is a need for apparatuses, systems and methods allowing for a secure and controlled provisioning of electronic components or devices, such as chips or microprocessors of the electronic equipment.

### SUMMARY OF THE INVENTION

It is therefore an object of the invention to provide apparatuses, systems and methods allowing for a secure and controlled provisioning of electronic devices, such as chips or microprocessors for electronic equipment.

The foregoing and other objects are achieved by the subject matter of the independent claims. Further implementation forms are apparent from the dependent claims, the description and the figures.

According to a first aspect of the invention a provisioning control apparatus is provided configured to be coupled to a provisioning equipment server, wherein the provisioning equipment server is electrically connectable with one or more electronic devices for provisioning the electronic devices with a program code in accordance with a first provisioning service tier (also referred to as provisioning service quality or level) of a plurality of provisioning service tiers. As used herein, the plurality of provisioning service tiers, such as the first provisioning service tier associated with the provisioning equipment server, define different provisioning service tiers or quality levels of the provisioning equipment server (as well as further provisioning equipment servers). The plurality of provisioning service tiers or quality levels of different provision equipment servers may, for instance, reflect the speed or another performance/quality measure for provisioning the one or more electronic devices by the respective server. The plurality of provisioning service tiers or quality levels may comprise, for instance, three different tiers or quality levels, such as tier 1, tier 2 and tier 3, wherein tier 1 is associated with a better provisioning service performance or quality than tier 2 and, in turn, tier 2 is associated with a better provisioning service performance or quality than tier 3.

The electronic devices may comprise chips, microprocessors or other programmable electronic components, such as Flash memories, electrically erasable programmable read only memories (EEPROM), programmable logic devices (PLDs), field programmable gate arrays (FPGAs), and microcontrollers incorporating non-volatile memory elements. The program code may be a firmware originally provided by a remote server. The program code may be digitally signed. The program code may be a personalized program code in that the program code can only be used to provision, i.e. personalize one respective electronic device, because it contains, for instance, a unique program code or electronic device identifier, such as an identification number.

The provisioning control apparatus according to the first aspect comprises a communication interface configured to receive an electronic provisioning token. Moreover, the provisioning control apparatus comprises a processor configured to determine on the basis of the electronic provisioning token a second provisioning service tier afforded by the electronic provisioning token. The communication interface is further configured to transmit the program code towards the provisioning equipment server, wherein the processor is further configured to prohibit a transmission of the program code towards the provisioning equipment server if the second provisioning service tier afforded by the electronic provisioning token is insufficient for provisioning of the one or more electronic devices by the provisioning equipment server in accordance with the first provisioning service tier. In other words, if the second provisioning service tier afforded by the electronic provisioning token is sufficient for provisioning of the one or more electronic devices by the provisioning equipment server in accordance with the first provisioning service tier, the processor does not prohibit, i.e. block the transmission of the program code via the communication interface towards the provisioning equipment server. For instance, the second provisioning service tier afforded by the electronic provisioning token may be insufficient for provisioning of the one or more electronic devices by the provisioning equipment server in accordance with the first provisioning service tier, if the second provisioning service tier is only tier 2, while the first provisioning service tier is a higher tier 1.

Advantageously, by means of the electronic provisioning token the provisioning control apparatus has control over the provisioning of the electronic devices by the provisioning equipment server. The provisioning control apparatus and the provisioning equipment server may be under the control of different parties, as will be described in more detail below.

In a further embodiment, the electronic provisioning token comprises a digital signature, wherein the processor is configured to determine the second provisioning service tier afforded by the electronic provisioning token, i.e. whether the electronic provisioning token is, for instance, a tier 1, 2 or 3 token, on the basis of the digital signature of the electronic provisioning token. Advantageously, this allows the provisioning control apparatus to determine the tier afforded by the electronic provisioning token and verify that the electronic provisioning token initially has been generated by a trustworthy source, namely a token generator server.

In a further embodiment, the provisioning control apparatus further comprises a memory storing a plurality of public keys of the token generator server, wherein each public key is associated with, i.e. corresponds to a respective provisioning service tier of the plurality of provisioning service tiers. The processor of the provisioning control apparatus is configured to determine the second provisioning service tier afforded by the electronic provisioning token, i.e. whether the electronic provisioning token is, for instance, a tier 1, 2 or 3 token, by verifying the digital signature of the electronic provisioning token with one of the plurality of public keys of the token generator server stored in the memory of the provisioning control apparatus. For instance, in the case of three different provisioning service tiers or quality levels, e.g. tier 1, 2 and 3, the memory of the provisioning control apparatus may store three different public keys of the token generator server for verifying the digital signature and, thus, determining the provisioning service tier of the electronic provisioning token.

In a further embodiment, the processor is further configured to prohibit, i.e. block a transmission of the program code towards the provisioning equipment server if the second provisioning service tier afforded by the electronic provisioning token is lower than the first provisioning service tier. For instance, in the case of three different provisioning service tiers or quality levels, e.g. tier 1, 2 and 3, the processor of the provisioning control apparatus may be configured not to block the transmission of the program code to the provisioning equipment server if the second provisioning service tier afforded by the electronic provisioning token is, for instance, tier 1 or 2, while the provisioning equipment server is only associated with a tier 3 provisioning service (i.e. with less quality or performance than the tier 1 and 2 provisioning services).

In a further embodiment, the communication interface is configured to receive the electronic provisioning token over a communication network, such as the Internet, from a remote server or the token generator server. The remote server may be the server of or associated with an electronic equipment manufacturer (herein also referred to as OEM) that uses the electronic devices provisioned with its firmware for assembling electronic equipment, such as smartphones, tablet computers as well as other types of loT devices. Advantageously, this allows the electronic equipment manufacturer to have control over the provisioning of the electronic devices with its firmware.

In a further embodiment, the communication interface may be configured to communicate with the provisioning equipment server via a wired connection. In an embodiment, the provisioning equipment server may be implemented as a personal computer and the provisioning control apparatus may be implemented as a PC card inserted in the provisioning equipment server.

In a further embodiment, the electronic provisioning token may comprise provisioning control data for controlling communications with the provisioning equipment server, wherein the processor is configured to retrieve the provisioning control data from the electronic provisioning token and to control communications of the communication interface with the provisioning equipment server according to the provisioning control data. In an embodiment, these provisioning control data may be provided in a header of the electronic provisioning token. Advantageously, this allows controlling the communication between the provisioning control apparatus and the provisioning equipment server, for instance, by selecting a secure communication protocol defined by the provisioning control data.

In a further embodiment, the electronic provisioning token may further comprise data defining one or more validity time periods of the electronic provisioning token, wherein the processor is configured to prohibit a transmission of the program code towards the provisioning equipment server outside of the one or more validity time periods. Advantageously, this allows restricting the provisioning of the electronic devices to specific times specified, for instance, by the electronic equipment manufacturer.

In a further embodiment, the electronic provisioning token may further comprise a token identifier for identifying the electronic provisioning token, wherein the provisioning control apparatus further comprises a memory, wherein the memory is configured to store the token identifier in a list of electronic provisioning tokens already used or in use. Advantageously, this allows protecting the provisioning control apparatus against a replay attack, i.e. an attack, where an already used electronic provisioning token is provided again for provisioning electronic devices. In an embodiment, the token identifier may be a nonce generated when generating the electronic provisioning token.

In a further embodiment, the electronic provisioning token may further comprise one or more electronic device type identifiers, wherein the processor is configured to prohibit a transmission of the program code towards the provisioning equipment server for provisioning an electronic device not corresponding to the one or more electronic device types identified by the one or more electronic device type identifiers. Advantageously, this allows making sure that only the intended electronic devices are provisioned with the program code using the electronic provisioning token. The electronic device type identifier may be, for instance, an identifier of a specific chip or microprocessor type.

In a further embodiment, the electronic provisioning token may further comprise one or more program code identifiers, wherein the processor is configured to prohibit a transmission of the program code towards the provisioning equipment server, if the program code differs from the program code(s) identified by the one or more program code identifiers. Advantageously, this allows making sure that only the intended program code(s), e.g. firmware(s) is used for provisioning electronic devices by the provisioning equipment server.

In a further embodiment, the communication interface is configured to receive the electronic provisioning token in encrypted form, wherein the processor is configured to decrypt the encrypted electronic provisioning token. A hybrid encryption scheme, such as PKCS#7, may be used. Advantageously, this allows preventing a malicious party from using an intercepted electronic provisioning token.

In a further embodiment, the electronic provisioning token further comprises a provisioning counter, wherein the provisioning counter indicates a total number of allowable transmissions of the program code towards the provisioning equipment server. The processor is further configured to retrieve the provisioning counter from the received electronic provisioning token and to update a value of the provisioning counter for each transmission of the program code towards the provisioning equipment server to obtain an updated provisioning counter. Moreover, the processor is configured to prohibit a further transmission of the program code towards the provisioning equipment server, if the updated provisioning counter indicates that the total number of transmissions has been reached. Advantageously, by means of the provisioning counter the provisioning control apparatus has control over the provisioning of electronic devices by the provisioning equipment server using the program code, which may be the program code of an electronic equipment manufacturer. Thereby, the electronic equipment manufacturer can have remote control via the provisioning control apparatus over the number of electronic devices provisioned by the provisioning equipment server with its program code, e.g. firmware. For instance, the processor may be configured to decrement the provisioning counter for each respective transmission of the program code to the provisioning equipment server and to prohibit a further transmission of the program code towards the provisioning equipment server, in case the updated provisioning counter indicates that no allowed transmissions are left, e.g. the updated provisioning counter has reached zero.

According to a second aspect the invention relates to a provisioning control system comprising: a provisioning control apparatus according to the first aspect of the invention; a provisioning equipment server being electrically connectable with one or more electronic devices for provisioning the one or more electronic devices with a program code, wherein the provisioning control apparatus is coupled to the provisioning equipment server for controlling the provisioning of the one or more electronic devices; and a token generator server configured to generate the electronic provisioning token.

In a further embodiment of the system according to the second aspect, the token generator server may be configured to generate the electronic provisioning token in response to a token request from a remote server, i.e. the remote server of the electronic equipment manufacturer. Advantageously, this allows the token generator server to generate and provide the electronic provisioning token on demand. In response to the request the token generator server may provide the generated electronic provisioning token to the remote server, which, in turn, may forward the generated electronic provisioning token to the provisioning control apparatus. Alternatively, the token generator server may provide the generated electronic provisioning token directly to the provisioning control apparatus.

In a further embodiment of the system according to the second aspect, the token generator server is configured to verify a digital signature of the token request using a public key of the remote server, before providing the electronic provisioning token to the remote server. Advantageously, this allows the token generator server to verify the remote server to be trustworthy.

In a further embodiment of the system according to the second aspect, the token generator server is configured to digitally sign the electronic provisioning token using one of a plurality of private keys, wherein each private key is associated with a respective provisioning service tier of the plurality of provisioning service tiers. For instance, in the case of three different provisioning service tiers or quality levels, e.g. tier 1, 2 and 3, the token generator server may use one of three different private keys for digitally signing the electronic provisioning token.

According to a third aspect the invention relates to a corresponding method for provisioning one or more electronic devices with a program code by a provisioning equipment server, wherein the provisioning equipment server is electrically connectable with the one or more electronic devices for provisioning the one or more electronic devices with the program code in accordance with a first provisioning service tier of a plurality of provisioning service tiers. The method comprises the steps of: receiving an electronic provisioning token; determining on the basis of the electronic provisioning token a second provisioning service tier afforded by the electronic provisioning token; and prohibiting a transmission of the program code towards the provisioning equipment server if the second provisioning service tier afforded by the electronic provisioning token is insufficient for provisioning of the one or more electronic devices by the provisioning equipment server in accordance with the first provisioning service tier.

The provisioning control method according to the third aspect of the invention can be performed by the provisioning control apparatus according to the first aspect of the invention and the provisioning control system according to the second aspect of the invention. Further features of the provisioning control method according to the third aspect of the invention result directly from the functionality of the provisioning control apparatus according to the first aspect of the invention, the provisioning control system according to the second aspect of the invention and their different implementation forms described above and below.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a provisioning control system according to an embodiment of the invention, including a provisioning control apparatus according to an embodiment of the invention;
Fig. 2 shows a schematic diagram illustrating a provisioning control scenario including two remotes servers providing a respective electronic provisioning token to two provisioning control apparatuses;
Fig. 3 shows a schematic diagram illustrating an exemplary electronic provisioning token used by the provisioning control apparatus of figures 1 and 2;
Fig. 4 shows a signaling diagram illustrating the interaction of the provisioning control apparatus of figures 1 and 2 with the other components of the provisioning control system of figure 1; and
Fig. 5 shows a flow diagram illustrating steps of a provisioning control method according to an embodiment of the invention.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

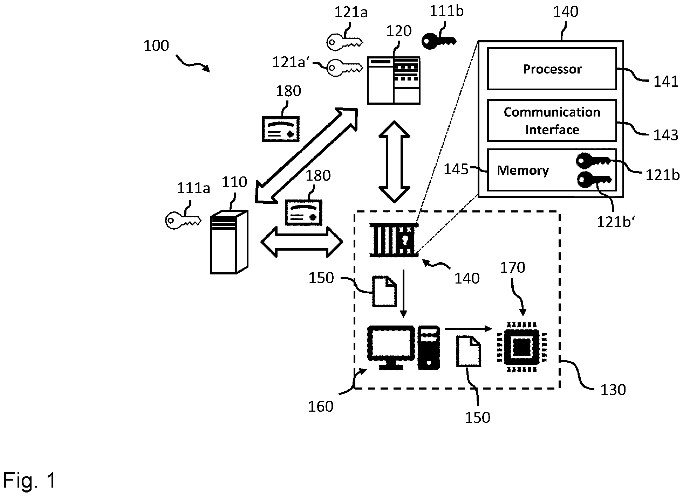

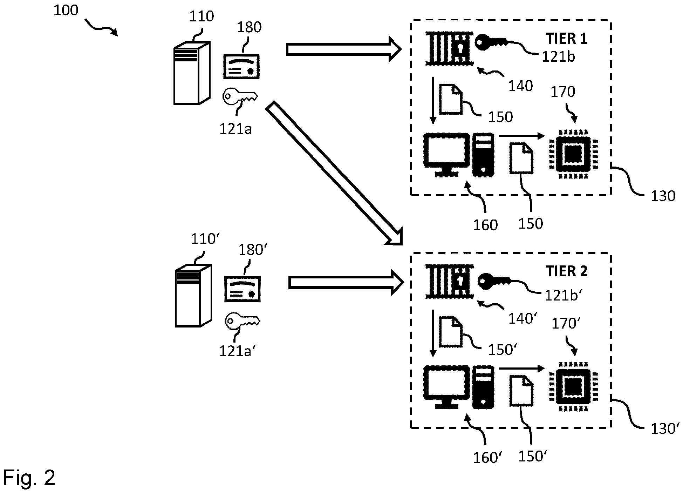

Figure 1 shows a schematic diagram of a provisioning control system 100 according to an embodiment of the invention, including a provisioning control apparatus 140 according to an embodiment of the invention. As will be described in more detail further below, the provisioning control system 100 may comprise in addition to the provisioning control apparatus 140 a first remote server 110, a second remote server 110' (shown in figure 2), a token generator server 120 and a provisioning equipment server 160 for provisioning or personalizing electronic devices 170, such as chips or microprocessors 170 with a program code 150, e.g. a firmware 150.

As illustrated in figure 1, the provisioning control apparatus 140, the remote server 110 and the token generator server 120 may be configured to communicate with each other via a communication network, such as the Internet. Thus, the provisioning control apparatus 140, the remote server 110 and the token generator server 120 may be at different locations and under the control of different parties. As illustrated in figure 1, the provisioning control apparatus 140 and the provisioning equipment server 160 may be located within a production environment 130, such as a personalization factory 130. In an embodiment, the remote server 110 may be under the control or associated with an electronic equipment manufacturer, e.g. an OEM, wherein the electronic equipment manufacturer assembles electronic equipment, such as smartphones, tablet computers or other types of loT or electronic consumer equipment, using the electronic devices 170 provisioned by the provisioning equipment server 160 with the program code 150. In an embodiment, the program code 150 may be a firmware of the electronic equipment manufacturer associated with the remote server 110.

In an embodiment, the provisioning control apparatus 140, the remote server 110 and the token generator server 120 are configured to securely communicate with each other using one or more cryptographic schemes, such as a public key infrastructure and/or a hybrid cryptographic scheme.

The provisioning control apparatus 140 is configured to be coupled to the provisioning equipment server 160, for instance, by a wired or a wireless connection. In an embodiment, the provisioning equipment server 160 may be implemented as a personal computer and the provisioning control apparatus 140 may be implemented as a PC card inserted in the provisioning equipment server 160. The provisioning equipment server 160 may comprise an electrical and/or mechanical interface for interacting directly or indirectly via a provisioning equipment with the electronic devices 170. For instance, the provisioning equipment server 160 may comprise a personalization tray for personalizing a batch of electronic devices inserted therein.

In the embodiment illustrated in figure 1 the provisioning control apparatus 140 comprises a processor 141, a communication interface 143 and a non-transient electronic memory 145. The communication interface 143 of the provisioning control apparatus 140 is configured to receive an electronic provisioning token 180. In an embodiment, the electronic provision token 180 is generated by the token generator server 120. In an embodiment, the token generator server 120 may be configured to generate the electronic provisioning token 180 in response to a token request from the remote server 110 associated with the electronic equipment manufacturer. Advantageously, this allows the token generator server 120 to generate and provide the electronic provisioning token 180 on demand, i.e. when the electronic equipment manufacturer wants to obtain electronic devices 170 provisioned with the program code 150 for assembling electronic equipment.

In response to the request the token generator server 120 may provide the generated electronic provisioning token 180 to the remote server 110, which, in turn, may forward the generated electronic provisioning token 180 to the provisioning control apparatus 140. In a further embodiment, the token generator server 120 may provide the generated electronic provisioning token 180 directly to the provisioning control apparatus 140.

In an embodiment, the communication interface 143 of the provisioning control apparatus 140 is configured to receive the electronic provisioning token 180 in encrypted form, wherein the processor 141 is configured to decrypt the encrypted electronic provisioning token 180. For instance, a hybrid encryption scheme, such as PKCS#7, may be used. Advantageously, this allows preventing a malicious party from successfully using an intercepted electronic provisioning token 180.

As will be described in more detail below, the provisioning equipment server 160 is configured to provision the electronic devices 170 with the program code 150 in accordance with a specified provisioning service tier (also referred to as provisioning service quality or level) of a plurality of provisioning service tiers. As used herein, the plurality of provisioning service tiers, such as the first provisioning service tier associated with the provisioning equipment server 160, define different provisioning service tiers or quality levels of the equipment provisioning provided by the provisioning equipment server 160 (as well as further provisioning equipment servers, such as the further provisioning equipment server 160' shown in figure 2). The plurality of provisioning service tiers or quality levels of the different provision equipment servers 160, 160' may, for instance, reflect the speed or another quality/performance measure for provisioning the one or more electronic devices 170, 170' by the provisioning equipment server 160 and the provisioning equipment server 160' shown in figure 2, respectively. The plurality of provisioning service tiers or quality levels may comprise, for instance, three different tiers or quality levels, such as tier 1, tier 2 and tier 3, wherein tier 1 is associated with a better provisioning service performance or quality than tier 2 and, in turn, tier 2 is associated with a better provisioning service performance or quality than tier 3.

The processor 141 of the provisioning control apparatus 160 shown in figure 1 is configured to determine on the basis of the electronic provisioning token 180 a second provisioning service tier afforded by the electronic provisioning token 180. While the communication interface 143 is further configured to transmit the program code 150 towards the provisioning equipment server 160, the processor 141 is further configured to prohibit a transmission of the program code 150 towards the provisioning equipment server 160 if the second provisioning service tier afforded by the electronic provisioning token 180 is insufficient for provisioning of the one or more electronic devices 170 by the provisioning equipment server 160 in accordance with the first provisioning service tier. In other words, if the second provisioning service tier afforded by the electronic provisioning token 180 is sufficient for provisioning of the one or more electronic devices 170 by the provisioning equipment server 160 in accordance with the first provisioning service tier, the processor 141 does not prohibit, i.e. block the transmission of the program code 150 via the communication interface 143 towards the provisioning equipment server 160. For instance, the second provisioning service tier afforded by the electronic provisioning token 180 may be insufficient for provisioning of the one or more electronic devices 170 by the provisioning equipment server 160 in accordance with the first provisioning service tier, if the second provisioning service tier, i.e. the tier afforded or defined by the electronic provisioning token 180 is only tier 2, while the first provisioning service tier, i.e. the tier associated with the provisioning equipment server 160 is a higher tier 1.

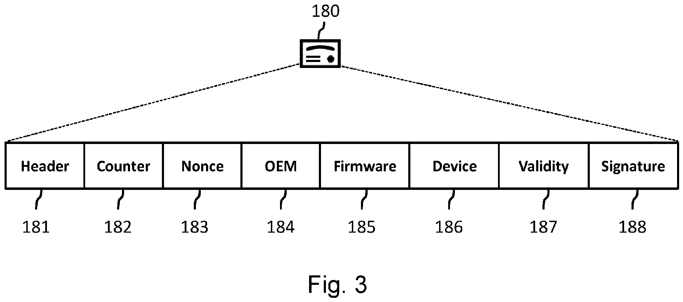

As can be taken from figure 3, the electronic provisioning token 180 may comprise a digital signature 188, wherein the processor 141 is configured to determine the second provisioning service tier afforded, i.e. defined by the electronic provisioning token 180, i.e. whether the electronic provisioning token 180 is, for instance, a tier 1, 2 or 3 token, on the basis of the digital signature 188 of the electronic provisioning token 180.

As illustrated in figure 1, the provisioning control apparatus 140 may further comprise a non-transient electronic memory 145 storing a plurality of public keys 121b, 121b' of the token generator server 120, wherein the corresponding private keys 121a, 121a' are securely stored in the token generator server 120. In an embodiment, each public key 121b, 121b' is associated with, i.e. corresponds to a respective provisioning service tier of the plurality of provisioning service tiers. In an embodiment, the processor 141 of the provisioning control apparatus 140 is configured to determine the second provisioning service tier afforded by the electronic provisioning token 180, i.e. whether the electronic provisioning token 180 is, for instance, a tier 1, 2 or 3 token, by verifying the digital signature 188 of the electronic provisioning token 180 with one of the plurality of public keys 121b, 121b' of the token generator server 120 stored in the memory 145 of the provisioning control apparatus 140. In the example shown in figure 1, the memory 145 of the provisioning control apparatus 140 stores two different keys 121b, 121b' of the token generator server 120 (corresponding to two different provisioning service tiers or quality levels, e.g. tier 1 and 2) for verifying the digital signature 188 and, thus, determining the provisioning service tier associated with the electronic provisioning token 180.

In a further embodiment illustrated in figure 2, the processor 141 of the provisioning control apparatus 140 is further configured to prohibit, i.e. block a transmission of the program code 150 towards the provisioning equipment server 160 if the second provisioning service tier afforded by the electronic provisioning token 180 is lower, i.e. indicates a lower quality or performance of the provisioning service than the first provisioning service tier associated with the provisioning equipment server 160. Figure 2 shows an example of the provisioning control system 100 with two remote servers 110, 110' interacting with the production environment 130, including the provisioning control apparatus 140 and the provisioning equipment server 160, and a further production environment 130', including the further provisioning control apparatus 140' and the further provisioning equipment server 160'. As illustrated in figure 2, by way of example, the production environment 130, including the provisioning equipment server 160 provides a high quality and/or performance tier 1 provisioning service, while the further production environment 130', including the further provisioning equipment server 160' provides a lower quality and/or performance tier 2 provisioning service. For instance, the production environment 130 may be associated with a higher tier provisioning service because it is capable of provisioning and delivering the one or more electronic devices 170 faster than the further production environment 130'.

For the exemplary case illustrated in figure 2 with two different provisioning service tiers or quality levels, e.g. tier 1 and 2, the processor of the further provisioning control apparatus 160' of the further production environment 130' may be configured not to block the transmission of the program code 150' to the provisioning equipment server 160' if the second provisioning service tier afforded by the electronic provisioning token 180 is, for instance, tier 1, while the provisioning equipment server 160' is only associated with a tier 2 provisioning service (i.e. with less quality or performance than tier 1 and 2 provisioning services). Likewise, the processor 141 of the provisioning control apparatus 160 of the production environment 130 will not block the transmission of the program code 150 to the provisioning equipment server 160, because both the second provisioning service tier afforded by the electronic provisioning token 180 (digitally signed with the tier 1 private key 121a) and the first provisioning service tier associated with the provisioning equipment server 160 are tier 1, i.e. high quality and/or performance. However, in case it would receive the tier 2 electronic provisioning token 180' (digitally signed with the tier 2 private key 121a') the processor 141 of the provisioning control apparatus 160 of the production environment 130 would block the transmission of the program code 150 to the provisioning equipment server 160, because of the insufficient, e.g. lower second provisioning service tier afforded, i.e. defined by the electronic provisioning token 180'. In other words, in the example shown in figure 2, the tier 2 production environment 130', including the further provisioning control apparatus 140' and the further provisioning equipment server 160' accept both the tier 1 electronic provisioning token 180 and the tier 2 electronic provisioning token 180', while the tier 1 production environment 130 only accepts the tier 1 electronic provisioning token 180, but not the tier 2 electronic provisioning token 180'.

As illustrated in figure 3, in addition to the digital signature 188 the electronic provisioning token 180 may comprise further data, such as provisioning control data 181 for controlling communications between the provisioning control apparatus 140, 140' and the provisioning equipment server 160, 160'. The processor 141 may be configured to retrieve the provisioning control data 181 from the electronic provisioning token 180, 180' and to control communications of the communication interface 143 with the provisioning equipment server 160, 160' according to the provisioning control data 181. As illustrated in figure 3, these provisioning control data 181 may be provided in a header 181 of the electronic provisioning token 180. Advantageously, this allows controlling the communication between the provisioning control apparatus 140, 140' and the provisioning equipment server 160, 160', for instance, by selecting a secure communication protocol on the basis of the provisioning control data 181.

Moreover, the electronic provisioning token 180 may comprise data 187 defining one or more validity time periods of the electronic provisioning token 180. The processor 141 may be configured to prohibit a transmission of the program code 150, 150' towards the provisioning equipment server 160, 160' outside of the one or more validity time periods. Advantageously, this allows restricting the provisioning of the electronic devices 170, 170' with the program code 150, 150' to specific times specified, for instance, by the equipment manufacturer(s) associated with the remote server(s) 110, 110' and/or the token generator server 120.

Furthermore, the electronic provisioning token 180 may comprise a token identifier 183 for uniquely identifying the electronic provisioning token 180, wherein the electronic memory 145 of the provisioning control apparatus 140, 140' is configured to store the token identifier 183 in a list (i.e. a black list) of electronic provisioning tokens 180, 180' already used or in use. Advantageously, this allows protecting the provisioning control apparatus 140, 140' against a replay attack, i.e. an attack, where an already used electronic provisioning token is provided again for provisioning electronic devices 170, 170'. In an embodiment, the token identifier 183 may be a nonce 183 generated by the token generator server 120 when generating the electronic provisioning token 180.

As illustrated in figure 3, the electronic provisioning token 180 may further comprise one or more electronic device type identifiers 186. The processor 141 may be configured to prohibit a transmission of the program code 150, 150' towards the provisioning equipment server 160, 160' for provisioning an electronic device not corresponding to the one or more electronic device types identified by the one or more electronic device type identifiers 186. Advantageously, this allows making sure that only the intended electronic devices 170, 170' are provisioned with the program code 150, 150' using the electronic provisioning token 180. The one or more electronic device type identifiers 186 may include, for instance, an identifier of a specific chip or microprocessor type.

Moreover, the electronic provisioning token 180 may further comprise one or more program code identifiers 185. The processor 141 may be configured to prohibit a transmission of the program code 150, 150' towards the provisioning equipment server 160, 160', if the program code 150, 150' differs from the one more program codes identified by the one or more program code identifiers 185. Advantageously, this allows making sure that only the intended program codes, e.g. firmware 150, 150' are used for provisioning the electronic devices 170, 170'. As illustrated in figure 3, the electronic provisioning token 180 may further comprise one or more identifiers 184 for identifying the electronic equipment manufacturer associated with the electronic provisioning token 180, 180'.

As illustrated in figure 3, the electronic provisioning token 180 may further comprise a provisioning counter 182 indicating a total number of transmissions of the program code 150, 150'. The processor 141 of the provisioning control apparatus 140, 140' is configured to retrieve the provisioning counter 182 from the received electronic provisioning token 180 and to update, e.g. decrement a value of the provisioning counter 182 for each transmission of the program code 150, 150' to obtain an updated provisioning counter. The processor 141 is configured to prohibit a further transmission of the program code 150, 150' towards the provisioning equipment server 160, 160', if the updated provisioning counter indicates that the total number of transmissions has been reached, e.g. if the updated provisioning counter has reached the value zero. Advantageously, this allows the provisioning control apparatus 140, 140' to keep control over the number of electrical devices 170, 170' provisioned by the provisioning equipment server 160, 160' on the basis of the electronic provisioning token 180, 180'.

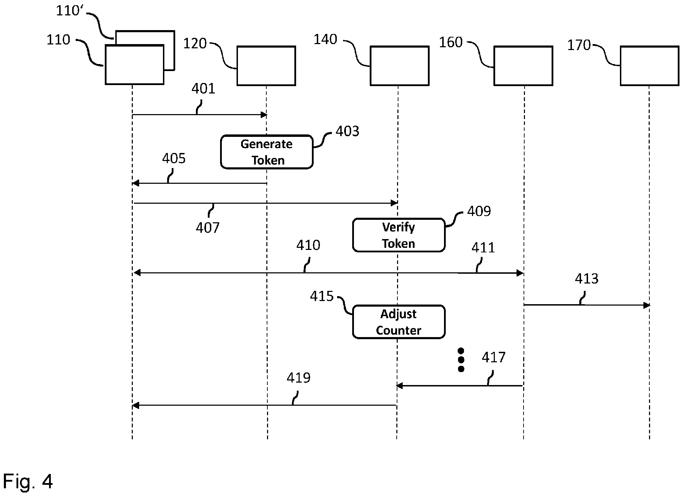

Figure 4 shows a signaling diagram illustrating the interaction of the provisioning control apparatus 140, 140' with the other components of the provisioning control system 100, i.e. the remote servers 110, 110', the token generator server 120, the provisioning equipment server 160, 160' and the electronic device(s) 170, 170' to be provisioned. In figure 4 the following steps are illustrated, some of which already have been described in the context of figures 1 and 2 above.

In step 401 of figure 4, by way of example the remote server 110 (associated, for instance, with a specific electronic equipment manufacturer) sends a token request to the token generator server 120 (the request may be also send by the second remote server 110', however, in the following the scenario will be described by way of example in the context of the first remote server 110). The token request may be digitally signed by the remote server 110 using a private key 111a. Thus, the token generator server 120 may be configured to verify the digital signature of the token request using a public key 111b of the remote server 110, before providing the electronic provisioning token 180 to the remote server 110. Advantageously, this allows the token generator server 120 to verify the remote server 110 to be trustworthy.

In response to the request of step 401 the token generator server 120 in step 403 of figure 4 generates an electronic provisioning token 180. In addition to the digital signature 188 (created using one of the plurality of private keys 121a, 121a', wherein each private key 121a, 121a' is associated with a different provisioning service tier) described above the electronic provisioning token 180 may comprise one or more of the data elements illustrated in figure 3, as already described above.

In step 405 the token generator server 120 provides the electronic provisioning token 180 to the remote server 110, which, in turn, forwards the electronic provisioning token 180 to the provisioning control apparatus 140 (step 407 of figure 4). Once received the provisioning control apparatus 140 verifies the electronic provisioning token 180 in step 409 of figure 4 by verifying the digital signature 188 of the electronic provisioning token 180 using one of the plurality of public keys 121b, 121b' of the token generator server 120 and thereby determine the provisioning service tier afforded by the electronic provisioning token 180, as already described in detail in the context of figures 1 and 2.

In case the provisioning control apparatus 140 determines in step 409 based on the digital signature 188 that the provisioning service tier afforded by the electronic provisioning token 180 is not sufficient for a provisioning of electronic devices by the provisioning equipment server 160 (e.g. because the electronic equipment server 160 is associated with a higher tier provisioning service), the processor 141 of the provisioning control apparatus 160 will block any transmission of the program code 150 to the provisioning equipment server. This may be reported to the remoter server 110 in step 410 of figure 4.

If otherwise this verification is successful (e.g. the provisioning service tier afforded by the electronic provisioning token 180 is higher than or equal to the provisioning service tier associated with the provisioning equipment server 160), the provisioning control apparatus 140 provides a personalized program code 150 to the provisioning equipment server 160 (step 411 of figure 4), which, in turn, uses the personalized program code 150 for provisioning an electronic device 170 (step 413 of figure 4). For each transmission of a personalized program code 150 the provisioning control apparatus 140 adjusts the value of the provisioning counter 182 (step 415 of figure 4). This provisioning of the electronic devices 170 continues until the total number of allowed electronic devices 170 (as defined by the provisioning counter 182) has been provisioned by the provisioning equipment server 160. In step 417 of figure 4, the provisioning equipment server 160 sends a corresponding report to the provisioning control apparatus 140. At this stage, the provisioning control apparatus 140 will block any further transmissions of personalized program code 150 to the provisioning equipment server 160 and, thus, block the personalized provisioning of any further electronic devices 170.

In step 419 of figure 4 the provisioning control apparatus 140 reports to the remote server 110 associated with the electronic equipment manufacturer that the total number of electronic devices 170 (as indicated by the initial provisioning counter 182 of the electronic provisioning token 180) have been provisioned with a respective personalized program code 150. This may trigger the remote server 110 to provide a further electronic provisioning token 180 to the provisioning control apparatus 140 and/or to request a new electronic provisioning token 180 from the token generator server 120.

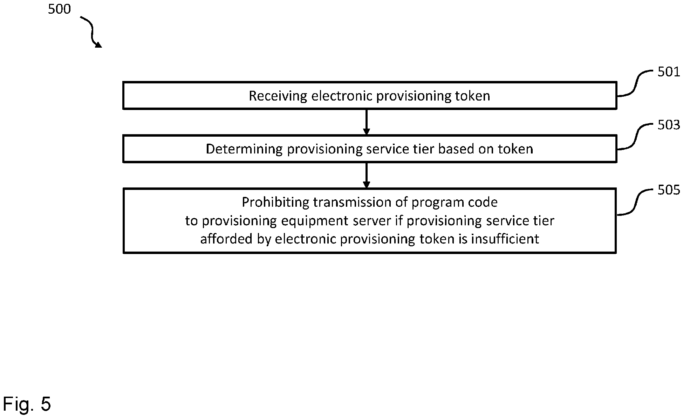

Figure 5 shows a flow diagram illustrating steps of a method 500 for provisioning one or more electronic devices 170, 170' with a program code 150, 150' by a provisioning equipment server 160, 160', wherein the provisioning equipment server 160, 160' is electrically connectable with the one or more electronic devices 170, 170' for provisioning the one or more electronic devices 170, 170' with the program code 150, 150' in accordance with a first provisioning service tier of a plurality of provisioning service tiers.

The method 500 comprises the steps of: receiving 501 an electronic provisioning token 180, 180'; determining 503 on the basis of the electronic provisioning token 180, 180' a second provisioning service tier afforded by the electronic provisioning token 180, 180'; and prohibiting 505 a transmission of the program code 150, 150' towards the provisioning equipment server 160, 160' if the second provisioning service tier afforded by the electronic provisioning token 180, 180' is insufficient for provisioning of the one or more electronic devices 170, 170' by the provisioning equipment server 160, 160' in accordance with the first provisioning service tier.

As will be appreciated, embodiments of the invention provide a higher flexibility with respect to the secure production and personalization of electronic devices and equipment. Moreover, embodiments of the invention allow delegating secure production of electronic devices and components for electronic equipment. Moreover, embodiments of the invention allow load balancing and on-demand production/personalization of security critical systems.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A provisioning control apparatus (140, 140') configured to be coupled to a provisioning equipment server (160, 160'), the provisioning equipment server (160, 160') being electrically connectable with one or more electronic devices (170, 170') for provisioning the one or more electronic devices (170, 170') with a program code (150, 150') in accordance with a first provisioning service tier of a plurality of provisioning service tiers, wherein the provisioning control apparatus (140, 140') comprises:
a communication interface (143) configured to receive an electronic provisioning token (180, 180'); and
a processor (141) configured to determine on the basis of the electronic provisioning token (180, 180') a second provisioning service tier afforded by the electronic provisioning token (180, 180');
wherein the communication interface (143) is further configured to transmit the program code (150, 150') towards the provisioning equipment server (160, 160'); and
wherein the processor (141) is further configured to prohibit a transmission of the program code (150, 150') towards the provisioning equipment server (160, 160') if the second provisioning service tier afforded by the electronic provisioning token (180, 180') is insufficient for provisioning of the one or more electronic devices (170, 170') by the provisioning equipment server (160, 160') in accordance with the first provisioning service tier.

2. The provisioning control apparatus (140, 140') of claim 1, wherein the electronic provisioning token (180, 180') comprises a digital signature (188) and wherein the processor (141) is configured to determine the second provisioning service tier afforded by the electronic provisioning token (180, 180') on the basis of the digital signature (188) of the electronic provisioning token (180, 180').

3. The provisioning control apparatus (140, 140') of claim 2, wherein the provisioning control apparatus (140, 140') further comprises a memory (145) storing a plurality of public keys (121b, 121b') of a token generator server (120), each public key (121b, 121b') being associated with a respective provisioning service tier of the plurality of provisioning service tiers, and wherein the processor (141) is configured to determine the second provisioning service tier afforded by the electronic provisioning token (180, 180') by verifying the digital signature (188) of the electronic provisioning token (180, 180') with one of the plurality of public keys (121b, 121b') of the token generator server (120).

4. The provisioning control apparatus (140, 140') of any one of the preceding claims, wherein the processor (141) is further configured to prohibit a transmission of the program code (150, 150') towards the provisioning equipment server (160, 160') if the second provisioning service tier afforded by the electronic provisioning token (180, 180') is lower than the first provisioning service tier.

5. The provisioning control apparatus (140, 140') of any one of the preceding claims, wherein the communication interface (143) is configured to receive the electronic provisioning token (180, 180') over a communication network from a remote server (110, 110').

6. The provisioning control apparatus (140, 140') of any one of the preceding claims, wherein the communication interface (143) is configured to communicate with the provisioning equipment server (160, 160') via a wired connection.

7. The provisioning control apparatus (140; 140') of any one of the preceding claims, wherein the electronic provisioning token (180, 180') comprises provisioning control data (181) for controlling communications with the provisioning equipment server (160, 160'), and wherein the processor (141) is configured to retrieve the provisioning control data (181) from the electronic provisioning token (180, 180') and to control communications of the communication interface (143) with the provisioning equipment server (160, 160') according to the provisioning control data (181).

8. The provisioning control apparatus (140, 140') of any one of the preceding claims, wherein the electronic provisioning token (180, 180') further comprises data (187) defining one or more validity time periods of the electronic provisioning token (180, 180') and wherein the processor (141) is configured to prohibit a transmission of the program code (150, 150') towards the provisioning equipment server (160, 160') outside of the one or more validity time periods.

9. The provisioning control apparatus (140, 140') of any one of the preceding claims, wherein the electronic provisioning token (180, 180') further comprises a token identifier (183) for identifying the electronic provisioning token (180, 180') and wherein the provisioning control apparatus (140, 140') further comprises an electronic memory (145), wherein the electronic memory (145) is configured to store the token identifier (183) in a list of electronic provisioning tokens already used or in use.

10. The provisioning control apparatus (140, 140') of any one of the preceding claims, wherein the communication interface (143) is configured to receive the electronic provisioning token (180, 180') in encrypted form and wherein the processor (141) is configured to decrypt the encrypted electronic provisioning token (180, 180').

11. The provisioning control apparatus (140, 140') of any one of the preceding claims, wherein the electronic provisioning token (180, 180') further comprises a provisioning counter (182), the provisioning counter (182) indicating a total number of transmissions of the program code (150, 150') towards the provisioning equipment server (160, 160');
wherein the processor (141) is further configured to retrieve the provisioning counter (182) from the received electronic provisioning token (180, 180');
wherein the processor (141) is further configured to update a value of the provisioning counter (182) for each transmission of the program code (150, 150') to obtain an updated provisioning counter; and
wherein the processor (141) is configured to prohibit a further transmission of the program code (150, 150') towards the provisioning equipment server (160, 160) if the updated provisioning counter indicates that the total number of transmissions has been reached.

12. A provisioning control system (100) comprising:
a provisioning control apparatus (140, 140') according to any one of the preceding claims;
a provisioning equipment server (160, 160') being electrically connectable with one or more electronic devices (170) for provisioning the one or more electronic devices (170) with a program code (150), wherein the provisioning control apparatus (140, 140') is coupled to the provisioning equipment server (160, 160') for controlling the provisioning of the one or more electronic devices (170); and
a token generator server (120) configured to generate the electronic provisioning token (180, 180').

13. The provisioning control system (100) of claim 12, wherein the token generator server (120) is configured to generate the electronic provisioning token (180, 180') in response to a token request from a remote server (110).

14. The provisioning control system (100) of claim 13, wherein the token generator server (120) is configured to verify a digital signature of the token request using a public key (111b) of the remote server (110), before providing the electronic provisioning token (180) to the remote server (110) or the provisioning control apparatus (140).

15. The provisioning control system (100) of any one of claims 12 to 14, wherein the token generator server (120) is configured to digitally sign the electronic provisioning token (180) using one of a plurality of private keys (121a, 121a'), wherein each private key (121a, 121a') is associated with a respective provisioning service tier of the plurality of provisioning service tiers.

16. A method (500) for provisioning one or more electronic devices (170, 170') with a program code (150, 150') by a provisioning equipment server (160, 160'), the provisioning equipment server (160, 160') being electrically connectable with the one or more electronic devices (170, 170') for provisioning the one or more electronic devices (170, 170') with the program code (150, 150') in accordance with a first provisioning service tier of a plurality of provisioning service tiers, wherein the method (500) comprises:
receiving (501) an electronic provisioning token (180, 180');
determining (503) on the basis of the electronic provisioning token (180, 180') a second provisioning service tier afforded by the electronic provisioning token (180, 180'); and
prohibiting (505) a transmission of the program code (150, 150') towards the provisioning equipment server (160, 160') if the second provisioning service tier afforded by the electronic provisioning token (180, 180') is insufficient for provisioning of the one or more electronic devices (170, 170') by the provisioning equipment server (160, 160') in accordance with the first provisioning service tier.
